# EUROPEAN PATENT APPLICATION

(11) **EP 3 617 295 A1**
(43) Date of publication of application: **04.03.2020**
(21) Application number: 18192029.9
(22) Date of filing: 31.08.2018
(51) Int. Cl.: C10G 1/02, C10B 53/06, C10B 1/04, C10B 47/18

(54) **SYSTEM AND METHOD FOR PRODUCING SHALE OIL FROM SHALE MATERIAL**

(71) Applicant: Albakri, Sami Abdulrahman A., 2342 -6233 Jeddah (SA)
(72) Inventor: Albakri, Sami Abdulrahman A., 2342 -6233 Jeddah (SA)
(74) Representative: LifeTech IP Spies & Behrndt Patentanwälte PartG mbB

(57) **Abstract**

A system for producing shale oil (10) from a shale material (11) is disclosed. The system comprises at least one retort unit (no) configured to receive the shale material and to release retort gases and to produce spent shale; a condensation unit (120) configured to condense the shale oil from the retort gases and to provide at least one non-condensable gas included in the retort gases; and a combustion unit (130) configured to generate heat by combusting the at least one non-condensable gas and/or the at least one spent shale, wherein the generated heat is provided to the at least one retort unit (110) as energy source for releasing the retort gases from the shale material (11).

## Description

The present invention relates to a system and a method for producing shale oil from a shale material and, in particular, to a fluidized bed combustion system fuelled with non-condensable, combustible gases and/or spent shale to deliver heat for a retort to produce the shale oil from the shale material.

### BACKGROUND

Oil shale is an alternative energy source that can improve economy, independence and self-sufficiency in energy supply. If the oil shale is heated to a certain temperature, it yields combustible gases, spent shale and shale oil. The latter is an unconventional oil that is produced from shale rocks and can be obtained by an underground retorting process (known as in-situ) or by an aboveground retorting process. The underground retorting process is performed by introducing heat to pyrolyse the underground oil shale deposits. This process has the advantages of preventing the mining, treatment, transport and disposing of large quantity of material. However, the in-situ retorting suffers from lack of permeability of the oil shale deposit, low thermal conductivity of the oil shale, underground water pollution risk, possible toxic and hydrocarbon gas leakage from the heated reservoir.

Another challenge is the significant energy requirement for oil shale retorting. In-situ applications depend highly on external energy sources such as electricity and natural gas. In order to improve self-sufficiency of the deposit, a modified in-situ retorting method can be applied. Here, the upper portion of the oil shale deposit is mined out to provide a void volume and the rest is shattered using conventional explosions. Hot air and gases are introduced to the voids of the reservoir to partially combust the evolving hydrocarbon gases to create required energy for the retorting.

When the underground mining costs, operational and capital cost are considered, the modified in-situ oil shale retorting technique cannot compete with current techniques and environmental impacts are still a concern.

On the other hand, in the aboveground retorting process, the oil shale is mined out and then heated in retorting reactors. Pre-treatment of the oil shale (e.g. excavated from the mine, crushing and screening) is essential to ensure the retorting operation requirements. The aboveground retorting process can be classified into lump oil shale retorting and particulate oil shale retorting. In the lump oil shale retorting process, a hot gas carrier is employed for supplying the heat to the oil shale, while a hot solid carrier is used for the particulate oil shale retorting processes. These processes too, lack efficiency, because they rely in part on external energy sources.

Therefore, there is a demand for alternative mounting systems, which overcome at least some of the above-mentioned problems.

### SUMMARY OF THE INVENTION

At least some of the problems of the conventional systems are overcome by a system of claim 1 or a method of claim 13. The dependent claims refer to further advantageous realisations of the claimed subject matter.

The present invention relates to a system for producing shale oil from a shale material. The system comprises at least one retort unit configured to receive the shale material and to release retort gases and/or spent shale. The system further comprises a condensation unit configured to obtain the shale oil and non-condensable gas, included in the retort gases. The system further comprises a combustion unit configured to generate heat by combusting at least one non-condensable gas and/or at least one spent shale, wherein the generated heat is provided to at least one retort unit as energy source for releasing the retort gases.

The at least one retort unit is, in particular, arranged vertically above ground. For example, the at least one retort unit may include multiple retorts and the combustion unit is a fluidized bed combustor. The fluidized bed is a vertical vessel, in which the particles are located and the gas streams form the bottom via a porous plate or nozzles. Depending on the mechanical and physical properties of particles as well as the superficial fluidization velocity, it is basically be distinguished between fixed bed (FB), stationary fluidized bed (SFB) and circulating fluidized bed (CFB). In the fixed bed, the superficial fluidization velocity is smaller than the minimum fluidization velocity and accordingly the particles remain stationary packed (the bed behaves like a porous medium). When the superficial fluidization velocity becomes bigger than the minimum fluidization velocity, the bed enters a fluidization state, so-called stationary fluidized bed. If the superficial fluidization velocity exceeds the solid terminal velocity, the particles start moving faster and the solids are carried out of the bed. The later flow regime is known as circulating fluidized bed. As a result of their advantages, the fluidized bed systems can be used in various industrial applications such as the mineral processes, the coating processes, the CO2 capture in the thermal power plants by chemical or carbonate looping process as well as the solid fuels conversion including gasification and combustion.

The fluidized bed combustor, which may be used within the system according to embodiments of the present invention may be operated as stationary fluidized bed or circulating fluidized bed to provide heat to one or multiple retorts.

Optionally, the condensation unit comprises a container for storing the shale oil and a valve unit for providing a controlled amount of the shale oil to the combustion unit to control the heat generation in the combustion unit.

The combustion unit may produce a hot gas-solid mixture, wherein the solid part may be shale ash. The system may further comprise a cooler unit with a cyclone and a cooler, wherein the cyclone may be configured to receive the hot gas-solid mixture and to separate hot gas from shale ash. The cooler may be configured to cool the shale ash, while preheating secondary air and to provide the preheated secondary air to the combustion unit.

Optionally, the system further comprises an air preheater configured to increase a pressure of the preheated secondary air before provided it to the combustion unit. The air preheater may be a rotating plate preheater with a fan or a compressor to increase the pressure of the preheated secondary air. The pressure should be sufficiently high to enable an inflow of the preheated secondary air into the combustion unit.

Optionally, the system further comprises a dryer unit with a dryer and a condenser. The dryer may be configured to dry raw oil shale by releasing a shale gas (wastewater and waste gas) and to provide dried oil shale to the retort unit(s). The condenser may be configured to condense the shale gas and to provide resulting waste gas to the combustion unit. In addition, the condenser may produce wastewater that may be output or disposed.

Optionally, the system further comprises heat exchangers. The latter may be configured for at least one of the following functions:
- to produce high-temperature steam by using the heat generated by the combustion unit,
- to preheat primary air by using the remaining heat after generating high-temperature steam,
- to provide the preheated primary air to the combustion unit,
- to provide at least part of the high-temperature steam as energy source for at least one retort unit.

Optionally, at least one retort unit comprises a tube bundle providing a flow path for the high-temperature steam. The tube bundle may be arranged to guide/direct the high-temperature steam in a same or an opposite direction as incoming shale material. The tube bundle may also provide a path that follows partly the same and partly the opposite direction as the incoming shale material. For example, if the shale material drops gravity-driven from a top to a bottom, the high-temperature steam may flow first against gravity upward and later with gravity downward or the other way around. This direction change may repeat any number of times, as desired.

Optionally, the system includes a back-pressure steam turbine (e.g. a non condensing steam turbine) or a steam turbine (e.g. an extraction steam turbine), a turbine condenser and a boiler feedwater pump. The steam turbine may be configured to drive an electricity generator using part of the high-temperature steam and to provide a low-temperature steam (in general only part thereof) to the dryer as energy source for the drying process of the raw oil shale. The turbine condenser may be configured to condense the (e.g. fully expanded) low-temperature steam from the steam turbine into water. The boiler feedwater pump may be configured to pump the water from the turbine condenser back to the heat exchangers.

The high-temperature steam may be defined as a steam, which is upstream from a heat consumer (or its corresponding inlet) or downstream of a heat source (e.g. the heat exchanger). In the same way, a low-temperature steam may be defined as steam downstream of an outlet of a heat consumer (e.g. turbine). In general, the high-temperature steam is defined to have a temperature higher than the low-temperature steam. In the same way, high/low-pressure steam can be defined as being upstream/downstream of units that decrease the pressure (e.g. turbine). It is understood that a pressure increase/drop results under normal circumstances in a temperature increase/drop in line with the laws of thermodynamics.

Optionally, the system further comprises at least one of the following components:
- one or more pre-heaters to preheat water;
- one or more economisers to further increase a temperature of the water;
- one or more evaporators to evaporate the water into steam;
- one or more superheaters to further heat the steam to produce the high-temperature steam;
- one or more re-heaters to reheat steam for feeding the reheated steam into the steam turbine;
- a high-pressure steam turbine arranged downstream from the one or more superheaters and upstream from the one or more re-heaters to drive the electricity generator using high-pressure steam;
- intermediate and low-pressure steam turbines.

The system may further comprise a first steam valve arranged upstream from the high-pressure steam turbine to control the flow of the high-pressure steam. The valve may in particular control the pressure and/or temperature of the steam. The system may likewise include a second steam valve arranged upstream from the steam turbine to control the flow of an intermediate-pressure steam. The second steam valve may likewise control the pressure and/or temperature of the steam. In addition, the high-temperature steam may be branched off to at least one retort unit upstream and/or downstream from the high-pressure steam turbine. The high-temperature steam may likewise be branched off to at least one retort unit upstream and/or downstream from the intermediate/low-pressure steam turbine.

Optionally, one or more of the following process parameters are set in the system:
- the high-temperature steam comprises a temperature in the range between 400°C and 700°C, in particular around 560°C (e.g. at the outlets of the superheater(s) and/or of the re-heater(s));
- a hot gas-solid output of the combustion unit comprises a temperature in the range between 700°C and 1000°C, in particular around 850°C;
- a temperature of the retort gas is in the range between 400°C and 600°C, in particular around 500°C;
- a temperature of the preheated secondary air is in the range between 250°C and 450°C, in particular around 350°C;
- a temperature of the preheated primary air is in the range between 200°C and 400°C, in particular around 300°C;
- an output steam temperature of the at least one retort is in the range between 200°C and 400°C, in particular around 300°C.

The present invention relates also to a method for producing shale oil from a shale material. The method comprises:
- feeding the shale material to at least one retort unit;
- decomposing the shale material into retort gases and spent shale in the at least one retort unit;
- condensing the shale oil from the retort gases, while providing at least one non-condensable gases included in the retort gases and/or providing at least one spent shale to fluidized bed combustor;
- generating heat by combusting the at least one non-condensable gases and/or at least one spent shale;
- providing the generated heat to the at least one retort unit as energy source for retorting the shale material.

Embodiments solve at least some of the aforementioned challenges in that the combustion system (fluidized bed) is fuelled with the non-condensable, combustible gases delivered from condensation system and optionally with the spent shales delivered from the retorts. The thermal energy released from the combustion may be absorbed by several shell and tube heat exchangers, converting water in superheated steam that is fed to the retorts and steam turbines. The retorting of oil shale may be carried out using several retorts, arranged around the fluidized bed combustor. Each of these retorts may be a moving bed with continuous feed from the top and equipped with a high-temperature steam pipe heat exchanger.

### BRIEF DESCRIPTION OF THE DRAWINGS

Various embodiments of the present invention will be described in the following by way of examples only, and with respect to the accompanying drawings, in which:
- Figs. 1: depicts a schematic view of the system for producing shale oil according to an embodiment of the present invention.
- Fig. 2: depicts a detailed embodiment for the system of Fig. 1.
- Fig. 3: depicts a simplified process layout for an embodiment with multiples retort units.
- Figs. 4A-4C: illustrate different possibilities of guiding the high-temperature steam within the retort(s).
- Fig. 5: depicts further details of the steam/water circuit according to yet another embodiment.
- Fig. 6: depicts further details of the steam/water circuit according to yet another embodiment.

### DETAILED DESCRIPTION

Various examples will now be described more fully with reference to the accompanying drawings, in which some examples are illustrated.

Accordingly, while examples are capable of various modifications and alternative forms, the illustrative examples in the figures will herein be described in detail. It should be understood, however, that there is no intent to limit examples to the particular forms disclosed, but on the contrary, examples are to cover all modifications, equivalents, and alternatives falling within the scope of the disclosure. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing illustrative examples only and is not intended to be limiting. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, steps, operations, elements and/or components, but do not preclude the presence or addition of one or more other features, steps, operations, elements, components and/or groups thereof.

Unless otherwise defined, all terms (including technical and scientific terms) used herein have the same meaning as commonly understood by one of ordinary skill in the art to which examples belong. It will be further understood that terms, e.g., those defined in commonly used dictionaries, should be interpreted as having a meaning that is consistent with their meaning in the context of the relevant art and will not be interpreted in an idealised or overly formal sense unless expressly so defined herein.

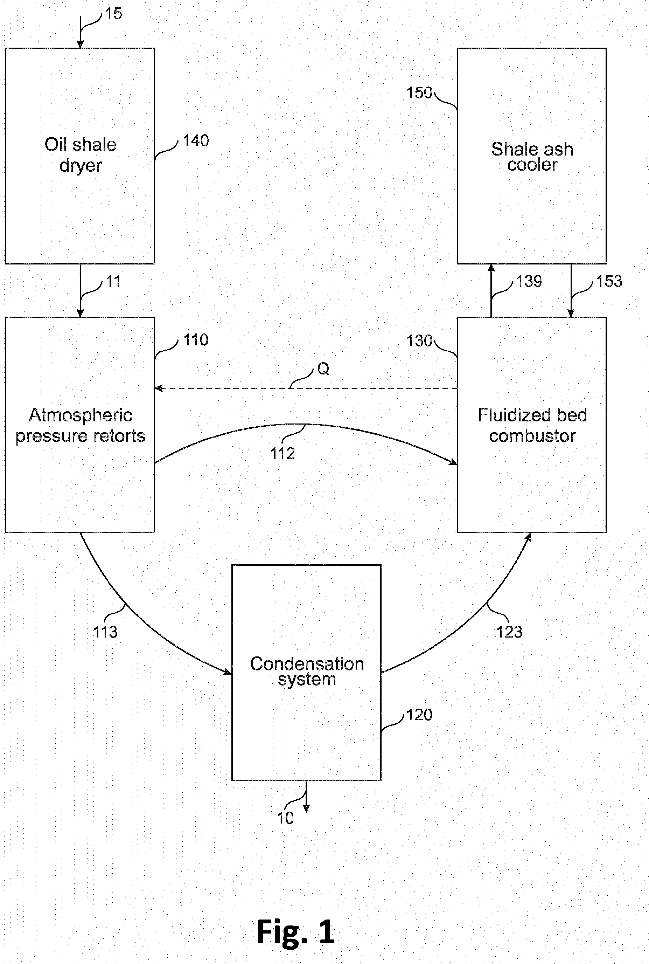

**Fig. 1** depicts a schematic view of the system for producing shale oil 10 according to an embodiment of the present invention, wherein shale material 15 is used as raw material. The system comprises at least one retort unit 110, a condensation unit 120 and a combustion unit 130 (e.g. a fluidized bed combustor). The retort unit 110 is configured to receive the shale material 11 and to release retort gases 113. The condensation unit 120 is configured to condense the shale oil 10 from the retort gases 113 and to provide at least one non-condensable gases 123 included in the retort gases 113. The combustion unit 130 is configured for generating heat Q by combusting the at least one non-condensable gases 123 and at least one spent shale 112, wherein the generated heat Q is provided to the at least one retort unit 110 as energy source for releasing the retort gas 113.

In the following the retort unit 110, the condensation unit 120 and the combustion unit 130 are often denoted by retort 110, condensation system 120 and combustor 130. These different names shall denote same components.

In general, the system may comprise N-retorts 110 (at atmospheric pressure), where N can be any number. In addition, the system may comprise an optional oil shale dryer 140, which dries the shale 15 before providing the dried shale material 11 to the retort(s) 110. The system may also comprise a shale ash cooler 150, which is configured to use the heat contained in shale ash 139 from the combustor 130 to preheat air 153 before providing it to the combustor unit 130.

The condensation unit/system 120 separates the shale oil vapours 10 from the retort gases 113. The shale oil 10 may be stored in a container and the non-condensable shale gases 123 are sent to the fluidized bed combustor 130.

The fluidized bed combustor 130 represents a boiler suitable for the combustion of different fuels (spent shale 112, shale oil 10, shale gases 123 and waste gases from the dryer 140) and can be operated as stationary or circulating fluidized beds.

The combustion system 130 may comprise of a primary combustion zone and a post-combustion zone (also known as a secondary combustion zone), in which (secondary) air 153 is injected and a zone with auxiliary burners. The latter operate with shale oil 10 or any other suitable fuel (e.g. natural gas) and are used on the one hand for plant start-up and on the other hand to control the combustion temperature, if the calorific value of other fuels (spent shale, shale gases and waste gases) is insufficient to maintain the required minimum temperature. The thermal energy Q released from the combustion may be absorbed by several shell and tube heat exchangers, converting water in superheated steam that is fed to a steam turbine and to N-retorts 110.

The dryer unit 140 with the (oil shale) dryer decreases the moisture content of the raw oil shale 15. The required thermal energy for the drying process can be provided by using low-temperature fluid (water or steam) from the water/steam cycle of the fluidized bed boiler, for example. Other possibility is to use the condensation heat form the condensation system 120 of the retort gases 113.

The shale ash cooler 150 cools down the shale ash 139 and preheats the combustion air 153 that is supplied to the fluidized bed combustor 130. The cooler can be operated as bubbling fluidized bed or circulating fluidized bed system with atmospheric pressure (other cooling systems such as vibratory fluidized bed may be also used).

The system may operate continuously in that the shale dryer 140 provides continuously shale material 11 to the retort 110. The retort 110 releases the retort gases 113 from the oil shale, resulting in spent shale 112 that is sent to the combustor unit 130 as fuel material. In the condensation system 120, the vapour of shale oil 10 condensates and the non-condensable shale gases 123 are sent to the combustor 130 as fuel material. Finally, the combustor unit 130 provides the heat Q for the retort unit 110 to release the retort gases 113 from the shale oil material 11.

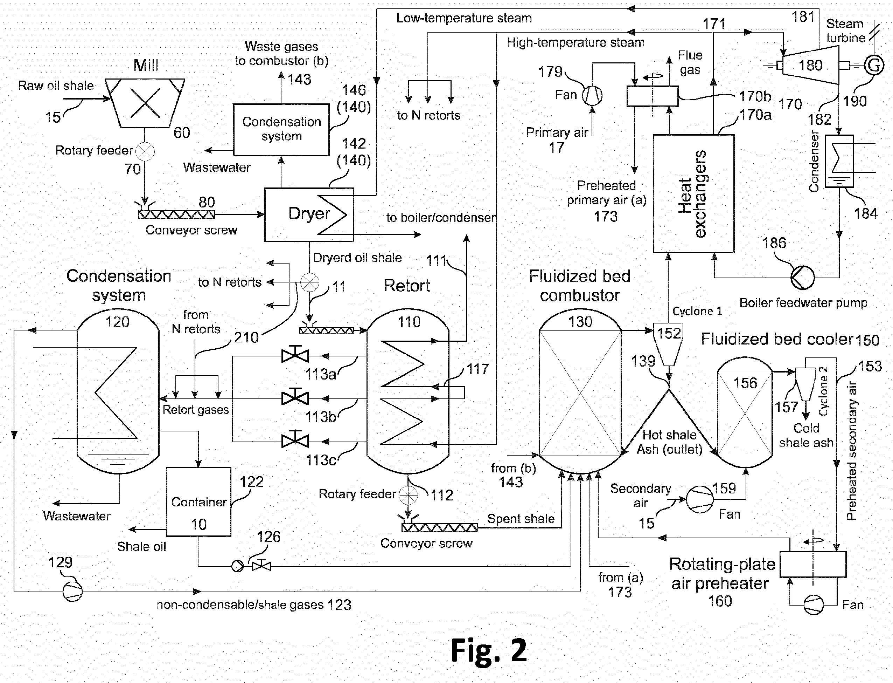

**Fig. 2** depicts a detailed embodiment for the system of Fig. 1. Raw oil shale 15 is introduced in the system via an optional mill 60 to crush/grind the oil shale 15 to provide a sufficiently fine grain structure. The crushing/grinding process increases the permeability and thermal conductivity of the oil shale 15 and thus the efficiency of the process. This is a major improvement compared to the conventional in-situ retorting process. The milled oil shale is then fed by a rotary feeder 70 and via an optional conveyor screw 80 to the dryer 142 (part of the dryer unit 140).

The dryer 142 is configured to dry the raw shale material 15 and provides the dried raw shale material 11 to the retort 110. Between the dryer 142 and the retort 110, an optional further conveyor screw may be arranged together with another rotary feeder to transport the dried raw oil shale 11 to the retort 110. The water-gas moisture produced by the dryer 142 is fed to a condensation system 146 (also part of the dryer unit 140) to condense the wastewater. The remaining waste gases 143 are fed to the combustor 130 as fuel material.

The retort 110 releases the retort gases 113, which are provided to the condensation system 120. The retort gases 113 may be released at different portions of the retort 110. For example, when the retort 110 is vertically arranged, a first part of retort gas 113a may be released at an upper portion, a second part 113b at an intermediate portion and a third part 113c may be released at a lower portion of the retort 110. The amounts of retort gases 113 transported to the condensation system 120 may be controlled by valves provided downstream for each retort gas flow 113a, ... after the retort unit 110.

The retort gases 113 condenses in the condensation system to produce wastewater and shale oil 10. The shale oil 10 is stored in a container 122. In addition, the condensation system 120 releases shale gases 123, which represents non-condensable gases. The shale gases 123 are provided via (first) a fan or compressor 129 to the combustion unit 130 as fuel material. In addition, a controllable portion of the produced shale oil 10 may be pumped through a valve 126 to control the fuel and thus the temperature in the combustor 130. The retort 110 provides the spent shale 112 (the oil shale 11 after releasing the retort gases 113) via a further rotary feeder and a conveyor screw to the combustion unit 130 as fuel material.

The combustion unit 130 represents, for example, a fluidized bed combustor and releases at its outlet a mixture of hot gas and solid material. Downstream of the outlet of the combustor 130, a cyclone 152 separates the hot gas from the solid material 139 (e.g. hot shale ash). The shale ash 139 is fed to the combustor 130 and/or to a cooler 156 (part of the cooler unit 150). The part of hot shale ash 139 provided to the combustor 130 recirculates the shale material in order to extract all available energy out of the shale material 15.

The cooler 156 receives secondary air 15 via a (second) fan or compressor 159, which is heated in the cooler 156 by cooling the hot shale ash 139. The resulting mixture of shale ash and preheated secondary air 15 is provided to a second cyclone 157, which separates the cold shale ash from the preheated secondary air 153. The preheated secondary air 153 is provided to a rotating plate air preheater 160, which increases the pressure and provides the preheated secondary air 153 as further input to the combustor 130.

The hot gas, which is output from the first cyclone 152 is fed to a heat exchanger unit 170 that generates high-temperature steam 171 from feedwater. The flue gas is, before releasing it to the atmosphere, used to preheat primary air 17, which is fed via a (third) fan or compressor 179. The preheated primary air 173 is also fed to the combustion unit 130. The high-temperature steam 171 released by the heat exchangers 170 is provided to the retort 110 as energy source to heat the oil shale 11 and thereby to release the retort gases 113 by using the heat Q provided by the high-temperature steam 171. Thereafter, the released water/steam flow 111 at the outlet of the retort 110 is again heated/evaporated/superheated by the heat exchangers 170, so that the water/steam circulates within the system.

In addition, the high-temperature steam 171 is fed to a steam turbine unit 180 to generate, by a generator 190, electricity. The resulting low-temperature steam 181 is provided to the dryer unit 142 to dry the raw oil shale 15. Again, the lower temperature steam/water at the outlet of the dryer 142 is provided to the boiler or condenser (heat exchanger unit 170) to circulate in the system. The steam at the outlet of the steam turbine 182 is sent to another condenser 184. In the latter, the steam condensates and the obtained water is pumped via a boiler feedwater pump 186 back to the heat exchanger unit 170.

The process cycle and the corresponding process parameter of the system in Fig. 2 can be summarised as follows. It starts with crushing and grinding of the raw oil shale 15 in the mill 60. The crushed/grinded raw oil shale 15 with a defined particle size distribution is dried to decrease its moisture content (in the dryer 142). The low-temperature steam 181 can be used for this drying process. The dried oil shale 11 is then sent for retorting and the water vapour/waste gases stream to the condensation system 146. Here, the water vapour condensates to wastewater and the waste gases 143 are supplied to the fluidized bed combustor 130.

The mass flow rate of the dried oil shale 11 is, for example, divided into four equal mass flow rates (N=4). Optionally, the mass flow rates may be different. Each retort 110 is designed, so that the oil shale 11 is fed to the top part and falls down to the bottom due to gravity. The oil shale 11 is heated by means of the high-temperature steam-pipe heat exchangers 117 and their kerogens decompose to shale gases and oil vapours (both known as retort gases 113). The retort gases 113 (at temperature of approximately 500 °C) leave at the bottom or from several locations at the sidewall of each retort and flow into a condensation system 120. In the latter, the shale oil 10 is extracted and stored in the container 122, while the shale gases 123 are supplied to the fluidized bed combustor 130. The condensation heat may be recovered to use in the process equipment (e.g. drying of the raw oil shale 15).

Part of the shale oil 10 produced can be used in the fluidized bed combustor 130 to maintain the required minimum combustion temperature, if the calorific values of the supplied fuels (spent shale 112, shale gases 123 and waste gases 143) are insufficient and/or to warm-up the system during the start-up procedure.

At the bottom of each retort 110, a screw conveyor may be used to transfer the spent shale 112 to the fluidized bed combustor 130. The spent shale 112 consists of fixed carbon (organic carbon) and a mixture of mineral materials (e.g. calcium carbonate and silicon dioxide). The combustion of the spent shale 112 in the combustor 130 has two advantages. On the one hand, it helps to reduce the organic carbon of the spent shale 112, resulting in residues (ash) that are inert to meet the regulations of environmental protection legislation, in particular the requirements on water and air pollution. On the other hand, the calcium carbonate (CaCO₃) is calcined in the fluidized bed combustor 130 and the obtained calcium oxide (CaO) is used for the flue gas desulphurisation.

In the fluidized bed combustor 130, the spent shales 112, the shale oil 10 (if necessary), the waste gas 143 and shale gases 123 are combusted using preheated primary and secondary air 17, 15. The primary air 17 may be supplied to the primary combustion zone, while the secondary air 15 may be provided to the post-combustion zone in order to burnout the remaining combustible substances that are not combusted in the primary combustion zone. The chemically bond energy of these fuels is converted into heat at approximately 850 °C (but it can higher or lower depending on requirement). Hence, the temperature of the gas-solid mixture at the outlet of the fluidized bed combustor 130 may be about 850 °C (± 100°C). This temperature can be achieved by controlling, for example, the input of supplemental shale oil via the pump/valve 126 from the container 122.

The heat of the gas-solid mixture streams from the fluidized bed combustor 130 is then fed to a first cyclone 152. The hot shale ash 139 is separated from the gas-solid mixture. Part of this ash 139 may circulate back into the bed 130 and the remaining part flows into an ash cooler 156. The latter for example is a fluidized bed system 150 and is used to cool down the shale ash temperature and simultaneously to preheat the combustion air (secondary air 15). Other ash cooler systems may be used, e.g. fluid bed coolers or moving bed fluidized bed cooler.

The cold shale ash exits the second cyclone 157 to a wet ash removal unit (not shown) and then is fed to ash silos, stored temporarily and discharged to be used as a filler material in road construction or in the cement industry, for example. The preheated secondary air 15 with a temperature of approximately 350 °C enters a rotating-plate air preheater heat exchanger 160 or a thermal oil heat exchanger. Finally, the preheated secondary air 15 is compressed and supplied to combustor 130.

The hot flue gas that leaves the first cyclone 152 flows through heat exchangers 170a (part of the heat exchanger unit 170), a rotating-plate air preheater 170b (may be part of the heat exchanger unit 170), the electrostatic precipitator (optional) and the induced-draft fan (not shown) that keeps furnace at a slight negative pressure. The primary air 17 is supplied by the fan 179 and flows through the air preheater 170b to increase its temperature to approximately 300 °C, before entering the combustor 130.

The water/steam circuit of the fluidized bed combustor 130 follows other similar thermal power plant (e.g. coal-fired power plant with natural/forced circulation or once-through). Some optional aspects thereof will be described later.

The system of Fig. 2 has only one retort unit 110. In general, there may be a plurality of retort units, which are arranged, for example, around the combustor unit 130. Respective branching points 210 are provided.

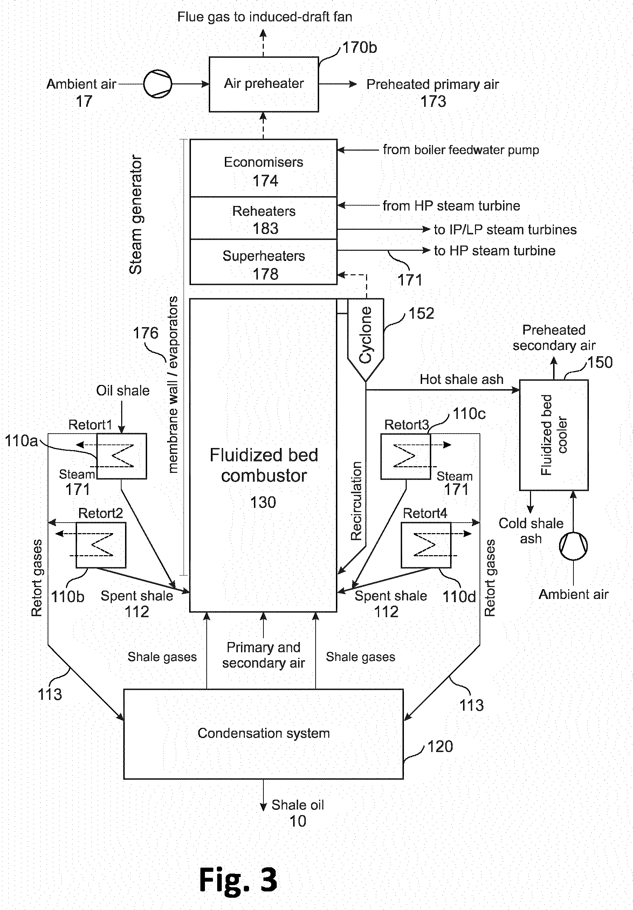

**Fig. 3** depicts a simplified process layout for an embodiment, wherein around the combustor unit 130 as an example four retort units 110a, 110b, 110c, 110d are arranged and connected to the to the combustor unit 130 and the condensation unit 120. The combustor 130 comprising one or more superheaters 178, one or more re-heaters 183, one or more evaporators 176 and one or more economisers 174 generates high-pressure and high-temperature steam 171, which is provided either to the retort unit 110 or to the steam turbine 180.

The flue gas leaves the steam generator and enters an air preheater 170b to preheat the primary air 17, before it leaves to atmosphere. The preheated primary air 173 is fed to the fluidized bed combustor 130. All other components are arranged and operate in the same way as described in Fig. 2.

The process may include a large-scale commercial fluidized bed combustor 130 (designed as grate firing, bubbling or circulating fluidized bed) yielding sufficient heat for the exemplary four retorts (the number of retorts can be higher or lower).

Each retort 110a, ... may be designed as a moving bed with continuous oil shale feed 11 from the top. The spent shale 112 and the retort gases 113 exit at the bottom of the retort 110 that may be operated with atmospheric pressure. High-temperature steam 171 from the water/steam cycle of the fluidized bed boiler 130/170 provides the required thermal energy for the oil shale retorting. Here, different configurations such as co-current flow circuit, counter flow circuit and co-current/counter flow circuit can be applied.

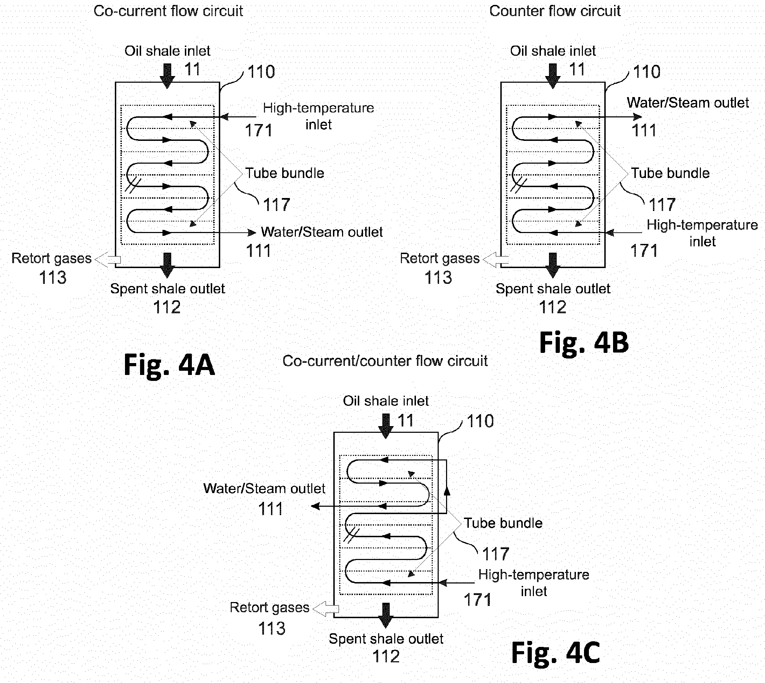

**Figs. 4A** - **4C** illustrate the different possibilities of using the high-temperature steam 171 produced by the heat exchangers 170 to decompose the oil shale 11 into the retort gases 113 and the spent shale 112.

In Fig. 4A, the high-temperature steam 171 is introduced in the retort 110 at an upper position and flows through a tube bundle 117 to an outlet for the water/steam 111 at a lower portion of the retort 110. The oil shale 11 is fed through an inlet at the upper portion of the retort 110 and the outlet for the spent shale 112 is arranged at a lower portion of the retort 110. The retort 110 operates, for example, in a vertical position, so that the shale material 11 falls down due to gravity. The retort gases 113 is released at an exemplary lower portion of the retort 110, but may also be released at various different portions.

Fig. 4B illustrates an embodiment, wherein the inlet for the high-temperature steam 171 is arranged at a lower portion of the retort 110 and the steam flows upward along a tube bundle 117 towards the outlet for water/steam 111 at an upper portion of the retort 110.

In the embodiment of Fig. 4C, the inlet for high-temperature steam 171 is again arranged at a lower portion of the retort 110 and flows upward. However, in this embodiment the flow direction of the high-temperature steam 171 is reverted at an intermediate position, so that it does not flow monotonically upward, but may jump, for example, from a middle portion to an upper portion and then flows downward. For example, the outlet for water/steam 111 is arranged at an intermediate position at the retort 110.

It is understood that the high-temperature steam 171 can flow through the retort 110 in any way, which is suitable to transfer heat energy from the high-temperature steam 171 to the oil shale 11. Fig. 4A represents, a so-called co-current flow heat exchange, wherein the oil shale 11 and the steam 171 have the same direction (the high-temperature steam 171 heats the cold oil shale 11). By contrast, in Fig. 4B the two flows move in opposite directions in the counter flow heat exchange. The different flow directions result in different temperature profiles. In Fig. 4A the temperature in the retort 110 is more monotonic (because the steam cools down quickly at the inlet), whereas in Fig. 4B a stronger temperature gradient from top to bottom is achieved. With the embodiment in 4C the temperature profile in the lower portion higher than in the upper portion.

The shown flows represent merely examples. The shown examples may be mixed in any possible way, i.e. the steam flow may jump back and forth in the retort and the inlet/outlet may be at any desired position. Therefore, any desired temperature profile may by generated.

Next, further details of the heat exchanger unit 170 are illustrated together with the steam turbine unit 180 representing the steam/water circuit.

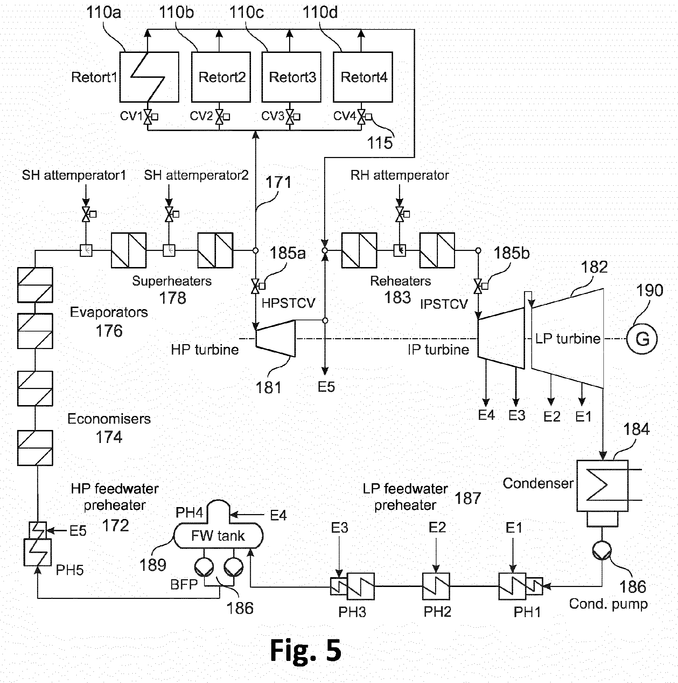

**Fig. 5** depicts an embodiment with a feedwater tank 189 to store feedwater. Feedwater pumps 186 pump the feedwater at first to one or more high-pressure feedwater preheaters 172 to preheat the feedwater. After the preheater(s) 172, one or more economisers 174 are arranged to further heat the water, followed by one or more evaporators 176 to evaporate the high-pressure feedwater. One or more superheaters 178 are arranged downstream of the evaporator(s) 176 to further increase the temperature of the steam generated by the evaporator(s) 176.

The generated high-temperature steam 171 is provided to the exemplary four retorts 110a, 110b, 110c, 110d, whose inlets are controlled by control valves 115 to ensure that sufficient high-temperature steam 171 is provided to the respective retorts 110. The temperature of the high-temperature steam 171 is, for example, 560°C, which is cooled down, by the retorts 110, to about 300°C. The output of the retorts 110 is fed to one or more re-heater units 183 to again reheat the steam.

A part of the high-temperature steam 171 may also be provided to a high-pressure steam turbine 181, whose inlet is controlled by a high-pressure steam control valve (HPSTCV) 185a and an outlet is connected to the re-heater(s) 183 for reheating the steam. The reheated steam is fed to the steam turbines 182 including an intermediate-pressure steam turbine (IP turbine) and subsequently a low-pressure steam turbine (LP turbine). All turbines 181, 182 may drive a generator 190 to generate electricity from the high-temperature steam 171. The output of the low-pressure steam turbine 182 is fed to a condenser 184 that condenses the steam into water, which is pumped through the condenser pump 186 to the feedwater tank 189. One or more low-pressure feedwater preheater 187 may be arranged between the condensation pump 186 and the feedwater tank 189.

The heat of the hot flue gas generated by the combustor unit 130 may be used to provide energy for at least some of the following components: the preheaters 172, 187 (PH), the economiser(s) 174, the evaporator(s) 176, the superheater(s) 178 (SH) and the re-heater(s) 183. In addition, at least part of the steam at the outlet of the high-pressure steam turbine 181 or at various stages of the intermediate-pressure steam turbine or the low-pressure steam turbine 182 may likewise be used as energy source for the low-pressure feedwater preheaters 187 (steam E5) and the low-pressure (LP) feedwater preheater(s) 172 (steam E1 to E3) and to heat the feedwater tank 189 (steam E4).

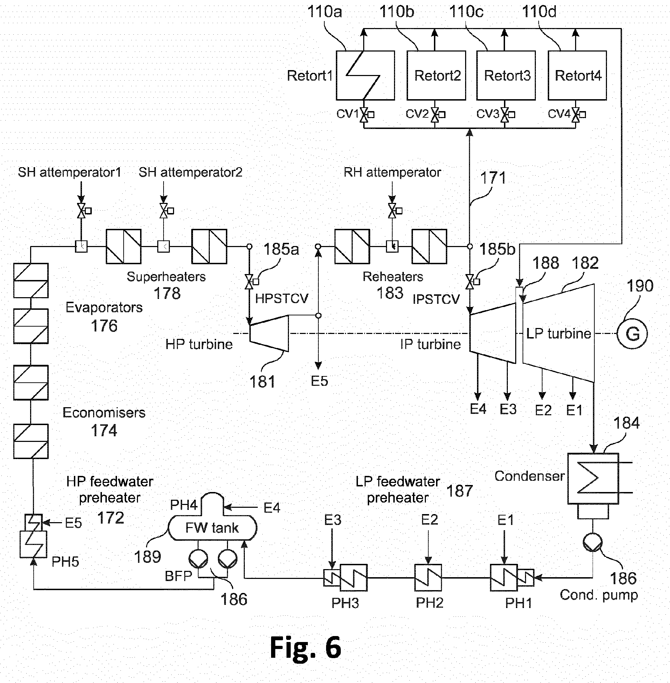

**Fig. 6** depicts an embodiment, wherein the preheaters 187, economisers 172, evaporators 176 and superheaters 178 are arranged in the same way as in Fig. 5. However, the retort units 110a, ... 110d will be supplied with the high-temperature steam 171 from the outlet of the re-heaters 183, instead of the high-temperature steam 171 provided by the outlet of the superheater(s) 178 as in Fig. 5. In addition, the outlets of the retorts 110 will provide the resulting steam to an inlet 188 between the intermediate-pressure steam turbine and the low-pressure steam turbine 182. All other components are arranged as in Fig. 5. A repeated description is therefore not needed.

The process of steam generation can be summarised as follows:
The feedwater enters the economisers 174 at the top of the steam generator. The water is then directed to the membrane wall evaporators 176, where the evaporation takes place. The saturated or partly superheated steam enters the superheaters 178. In between of these superheaters 178, different attemperator stages are arranged for steam temperature control. The steam leaves the steam generator and flows through the high-pressure (HP) steam turbine 181, before reentering the steam generator via the re-heater 183. The latter is generally divided into many heat exchangers and has one attemperator in between. Afterwards, the steam expands in the intermediate/low-pressure (IP/LP) steam turbines 182. At the outlet of the steam turbines 182, the completely expanded steam flows into condenser 184, before it is discharged into the feedwater tank 189 by the condenser pumps 186. The boiler feedwater pumps (BFP) 186 increase the pressure and transport the water into the economisers 174. For the power supply of the BFP 186, a steam propelled turbine (with steam) with a separate condenser is generally used. In between the condenser 184 and the economisers 174, several feedwater preheaters (PH) 187, 172 extract steam form the high, intermediate and low-pressure steam turbines in order to heat the feedwater mass flow.

The high-temperature steam 171 required for oil shale retorting can be extracted from different locations in the water/steam circuit. The number of possible configurations is high and is not limited to these, described below:
1. The superheated steam 171 with a temperature of 560 °C (temperature could be higher or lower) is used to heat the oil shale 11 in the retorts 110 (see Fig. 5). In order to achieve this, the high-pressure steam turbine control valve 185a (HPSTCV) is partly or completely closed, while the control valves of the retorts 110 (CV1 to CV4) are opened. The steam heats the oil shale 11 in the retorts 110 and exits with a temperature of approximately 300 °C (temperature could be lower or higher). Then, the steam enters the re-heater section 183. In case of failure of one or two retorts 110, the corresponding control valves 115 (e.g. CV1 and/or CV2) is closed and process can continue with the remaining retorts.
2. The reheated steam with a temperature of 560 °C (temperature could be higher or lower) can be used to heat the oil shale 11 in the retorts 110 (see Fig. 6). In order to achieve this, the intermediate-pressure steam turbine control valve 185b (IPSTCV) is partly or completely closed, while the control valves of the retorts 110 (CV1 to CV4) are opened. The steam heats the oil shale 11 in the retorts 110 and exits with a temperature of approximately 300 °C (temperature could be lower or higher). Then, the steam enters the low-pressure steam turbine 182. In case of failure of one or two retorts, the corresponding control valves 115 (e.g. CV1 and/or CV2) is closed and process can continue with the remaining retorts.
3. Both superheated steam and reheated steam 171 can be used to heat the oil shale in the retorts 110. In this case, the number of retorts 110 can be increased by factor two. As a result, the plant produces more shale oil and less amount of electricity. If the number of retorts 110 has to be the same as in point 1. and 2., two high-temperature steam-pipe heat exchangers (similar length to the single heat exchanger that used in the point 1. and 2.) are installed. The superheated steam 171 flows into the first heat exchanger, while the reheated steam streams into the second heat exchanger (vice versa is also possible).
4. Extracted steams from the high, intermediate and low-pressure steam turbines (E1 to E5) may be applied to heat the oil shale 11 in the retorts 110.

All values (e.g. for the temperature) are only approximations. It is understood that a range of ±10% or ±20% of the given value is still within the scope of the embodiments. The embodiments shall not be restricted on the particular values - or only insofar, the described effect can be achieved.

Advantageous aspects of the various embodiments can be summarised as follows:
- Simple construction and the suitability for large-scale operation;
- The possibility of retorting different fuels, including low ranking solid fuels (e.g. brown coal, oil shale, oil sand or tar sand);
- High shale oil production rate;
- Higher combustion efficiency compared to other combustion processes;
- Very low NOₓ and SOₓ emissions due to lower combustion temperature (750 °C to 850 °C) and the addition of limestone or the limestone that is already included in the spent shale;
- High heat and mass transfer rates from gas to solid in the retort and in the combustor, even with highly exothermic or endothermic reaction rates;
- The continuous operation with the possibility of solid transport in and out of system;
- The possible operation over a wide range of geometrical and mechanical properties of particles.

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature descripted in one embodiment may also be realised in other embodiments. Such combinations are covered by the disclosure herein unless it is stated that a specific combination is not intended.

### List of reference signs

- 10: shale oil
- 11: shale material (e.g. dried oil shale)
- 15: (raw) oil shale
- 17: primary air
- 110: retort unit(s)
- 111: water/steam outlet
- 112: spent shale
- 113: retort gases
- 115: retort valve(s)
- 117: tube bundle in the retort(s)
- 120: condensation unit
- 122: container
- 123: non-condensable (shale) gases
- 126: valve unit
- 129,159,179: fans/compressors
- 130: combustion unit
- 139: hot shale ash
- 140: dryer unit
- 142: dryer
- 143: waste gas
- 146: condenser
- 150: cooler unit
- 152,157: cyclones
- 153: preheated secondary air
- 156: cooler
- 160: air preheater
- 170,170a,170b: heat exchanger
- 171: high-temperature steam
- 172, 187: water preheater (low and high pressure)
- 173: preheated primary air
- 174: economiser
- 176: evaporator
- 178: superheater
- 180: steam turbine unit
- 181,182: high-pressure, intermediate-pressure, low-pressure steam turbine
- 183: re-heater
- 184: water condenser
- 185: steam turbine valve(s)
- 186: water pump(s)
- 188: steam inlet for low-pressure steam turbine
- 190: generator
- 210: branching point for multiple retorts
- Q: generated heat

## Claims

1. A system for producing shale oil (10) from a shale material (11), the system comprising:
at least one retort unit (110) configured to receive the shale material (11) and to release retort gases (113) and spent shale (112);
a condensation unit (120) configured to condense the shale oil (10) from the retort gases (113) and to provide at least one non-condensable gas (123) included in the retort gases (113); and
a combustion unit (130) configured to generate heat (Q) by combusting the at least one non-condensable gas (123) or the at least one spent shale (112), wherein the generated heat (Q) is provided to the at least one retort unit (110) as energy source for releasing the retort gas (113).

2. The system according to claim 1, wherein the condensation unit (120) comprises:
a container (122) for storing the shale oil (10); and
a valve unit (126) for providing a controlled amount of the shale oil (10) to the combustion unit (130) to control the heat generation in the combustion unit (130).

3. The system according to claim 1 or claim 2, wherein the combustion unit (130) produces a hot gas-solid mixture, the system further comprising:
a cooler unit (150) with a cyclone (152) and a cooler (156),
the cyclone (152) being configured to receive the hot gas-solid mixture and to separate hot gas from shale ash (139), and the cooler (156) being configured to cool the shale ash (139) while preheating secondary air (15) and to provide the preheated secondary air (153) to the combustion unit (130).

4. The system according to claim 3, further comprising an air preheater (160) configured to increase a pressure of the preheated secondary air (153) before provided it to the combustion unit (130).

5. The system according to one of the preceding claims, further comprising
a dryer unit (140) comprising a dryer (142) and a condenser (146),
the dryer (142) being configured to dry raw oil shale (15) by releasing a water-gas mixture and to provide dried oil shale (11) to the retort unit (110), and
the condenser (146) being configured to condense the water-gas mixture and to provide a resulting waste gas (143) to the combustion unit (130).

6. The system according to claim 5, further comprising:
heat exchangers (170) configured:
to produce high-temperature steam (171) by using the heat generated by the combustion unit (130) and
to preheat primary air (17) by using a remaining heat after generating high-temperature steam (171) and to provide the preheated primary air (173) to the combustion unit (130), and
to provide at least part of the high-temperature steam (171) as energy source for the at least one retort unit (110).

7. The system according to claim 6, wherein the at least one retort unit (110) comprises a tube bundle (117) providing a flow path for the high-temperature steam (171), the tube bundle (117) being arranged to guide the high-temperature steam (171) in a same or an opposite direction as incoming shale material (11) or partly in the same and partly in the opposite direction as the incoming shale material (11).

8. The system according to one of the preceding claims, wherein the at least one retort (110) includes multiple retorts and the combustion unit (130) is a fluidized bed combustor operable as stationary fluidized bed or circulating fluidized bed to feed heat (Q) to the multiples retorts (110).

9. The system according to one of claims 6 to 8, back referenced to claim 5, further comprising:
a turbine unit (180) with a steam turbine (182), a turbine condenser (184) and a boiler feedwater pump (186),
the steam turbine (182) being configured to drive an electricity generator (190) using part of the high-temperature steam (171) and to provide a part of low-temperature steam (181) to the dryer (142) as energy source for drying raw oil shale (15),
the turbine condenser (184) being configured to condense the expanded steam into water,
the boiler feedwater pump (186) being configured to pump the water from the turbine condenser (184) to the heat exchangers (170).

10. The system according to claim 9, further comprising at least one of the following components:
- one or more pre-heaters (187, 172) to preheat water;
- one or more economisers (174) to further increase a temperature of the water;
- one or more evaporators (176) to evaporate the water into steam;
- one or more superheaters (178) to further heat the steam to produce the high-temperature steam (171);
- one or more re-heaters (183) to reheat steam for feeding the reheated steam into the steam turbine (182);
- a high-pressure steam turbine (181) arranged downstream from the one or more superheaters (178) and upstream from the one or more re-heaters (183) to drive the electricity generator (190) based on high-pressure steam;
- intermediate and low-pressure steam turbines (182).

11. The system according to claim 10, further comprising:
a first steam valve (185a) arranged upstream from the high-pressure steam turbine (181) to control the flow of the high-temperature steam (171), in particular its pressure; and
a second steam valve (185b) arranged upstream from the intermediate/low-pressure steam turbine to control the flow, in particular its pressure, of the reheated steam fed into the steam turbine (182),
wherein the high-temperature steam (171) is branched off to the at least one retort unit (110) at least one of the following:
- upstream from the high-pressure steam turbine (181),
- downstream from the high-pressure steam turbine (181),
- upstream from the intermediate/low-pressure steam turbine,
- downstream from the intermediate/low-pressure steam turbine.

12. The system according to one of the preceding claims, wherein one or more of the following process parameters are set as follows:
- the high-temperature steam (171), in particular at the outlets of the superheater(s) (178) and/or of the re-heater(s) (183), comprise a temperature in the range between 400°C and 700°C, in particular around 560°C;
- a hot gas-solid output of the combustion unit (130) comprise a temperature in the range between 700°C and 1000°C, in particular around 850°C;
- a temperature of the retort gas (113) is in the range between 400°C and 600°C, in particular around 500°C;
- a temperature of the preheated secondary air (15) is in the range between 250°C and 450°C, in particular around 350°C;
- a temperature of the preheated primary air (17) is in the range between 200°C and 400°C, in particular around 300°C;
- an output steam temperature of the at least one retort (110) is in the range between 200°C and 400°C, in particular around 300°C.

13. A method for producing shale oil (10) from a shale material (11), the method comprising:
feeding the shale material (11) to at least one retort unit (110);
decomposing retort gases (113) and producing spent shale (112) in the at least one retort unit (110);
condensing the shale oil (10) from the retort gases (113), while releasing at least one non-condensable gas (123) included in the retort gases (113);
generating heat (Q) by combusting the at least one non-condensable gas (123) or the at least one spent shale; and
providing the generated heat (Q) to the at least one retort unit (110) as energy source for restoring of the shale material (11).

## Amended claims

### Amended claims in accordance with Rule 137(2) EPC.

1. A system for producing shale oil (10) from a shale material (11), the system comprising:
at least one retort unit (110) configured to receive the shale material (11) and to release retort gases (113) and spent shale (112);
a condensation unit (120) configured to condense the shale oil (10) from the retort gases (113) and to provide at least one non-condensable gas (123) included in the retort gases (113); and
a combustion unit (130) configured to generate heat (Q) by combusting the at least one non-condensable gas (123) or the at least one spent shale (112), wherein the generated heat (Q) is provided to the at least one retort unit (110) as energy source for releasing the retort gas (113),
**characterized by**
one or more heat exchangers (170) configured:
to produce high-temperature steam (171) by using the heat generated by the combustion unit (130), and
to provide at least part of the high-temperature steam (171) as energy source for the at least one retort unit (110).

2. The system according to claim 1, wherein the condensation unit (120) comprises:
a container (122) for storing the shale oil (10); and
a valve unit (126) for providing a controlled amount of the shale oil (10) to the combustion unit (130) to control the heat generation in the combustion unit (130).

3. The system according to claim 1 or claim 2, wherein the combustion unit (130) produces a hot gas-solid mixture, the system further comprising:
a cooler unit (150) with a cyclone (152) and a cooler (156),
the cyclone (152) being configured to receive the hot gas-solid mixture and to separate hot gas from shale ash (139), and the cooler (156) being configured to cool the shale ash (139) while preheating secondary air (15) and to provide the preheated secondary air (153) to the combustion unit (130).

4. The system according to claim 3, further comprising an air preheater (160) configured to increase a pressure of the preheated secondary air (153) before provided it to the combustion unit (130).

5. The system according to one of the preceding claims, further comprising
a dryer unit (140) comprising a dryer (142) and a condenser (146),
the dryer (142) being configured to dry raw oil shale (15) by releasing a water-gas mixture and to provide dried oil shale (11) to the retort unit (110), and
the condenser (146) being configured to condense the water-gas mixture and to provide a resulting waste gas (143) to the combustion unit (130).

6. The system according to claim 5, wherein
the heat exchangers (170) are further configured:
to preheat primary air (17) by using a remaining heat after generating high-temperature steam (171) and to provide the preheated primary air (173) to the combustion unit (130).

7. The system according to claim 6, wherein the at least one retort unit (110) comprises a tube bundle (117) providing a flow path for the high-temperature steam (171), the tube bundle (117) being arranged to guide the high-temperature steam (171) in a same or an opposite direction as incoming shale material (11) or partly in the same and partly in the opposite direction as the incoming shale material (11).

8. The system according to one of the preceding claims, wherein the at least one retort (110) includes multiple retorts and the combustion unit (130) is a fluidized bed combustor operable as stationary fluidized bed or circulating fluidized bed to feed heat (Q) to the multiples retorts (110).

9. The system according to one of claims 6 to 8, back referenced to claim 5, further comprising:
a turbine unit (180) with a steam turbine (182), a turbine condenser (184) and a boiler feedwater pump (186),
the steam turbine (182) being configured to drive an electricity generator (190) using part of the high-temperature steam (171) and to provide a part of low-temperature steam (181) to the dryer (142) as energy source for drying raw oil shale (15),
the turbine condenser (184) being configured to condense the expanded steam into water,
the boiler feedwater pump (186) being configured to pump the water from the turbine condenser (184) to the heat exchangers (170).

10. The system according to claim 9, further comprising at least one of the following components:
- one or more pre-heaters (187, 172) to preheat water;
- one or more economisers (174) to further increase a temperature of the water;
- one or more evaporators (176) to evaporate the water into steam;
- one or more superheaters (178) to further heat the steam to produce the high-temperature steam (171);
- one or more re-heaters (183) to reheat steam for feeding the reheated steam into the steam turbine (182);
- a high-pressure steam turbine (181) arranged downstream from the one or more superheaters (178) and upstream from the one or more re-heaters (183) to drive the electricity generator (190) based on high-pressure steam;
- an intermediate-pressure turbine and a low-pressure steam turbine (182).

11. The system according to claim 10, further comprising:
a first steam valve (185a) arranged upstream from the high-pressure steam turbine (181) to control the flow of the high-temperature steam (171), in particular its pressure; and
a second steam valve (185b) arranged upstream from the intermediate/low-pressure steam turbine to control the flow, in particular its pressure, of the reheated steam fed into the steam turbine (182),
wherein the high-temperature steam (171) is branched off to the at least one retort unit (110) at at least one of the following:
- upstream from the high-pressure steam turbine (181),
- downstream from the high-pressure steam turbine (181),
- upstream from the intermediate/low-pressure steam turbine,
- downstream from the intermediate/low-pressure steam turbine.

12. A method for producing shale oil (10) from a shale material (11), the method comprising:
feeding the shale material (11) to at least one retort unit (110);
decomposing retort gases (113) and producing spent shale (112) in the at least one retort unit (110);
condensing the shale oil (10) from the retort gases (113), while releasing at least one non-condensable gas (123) included in the retort gases (113);
generating heat (Q) by combusting the at least one non-condensable gas (123) or the at least one spent shale in a combustion unit (130);
providing the generated heat (Q) to the at least one retort unit (110) as energy source for restoring of the shale material (11),
**characterized by**
producing high-temperature steam (171) by using the heat generated by the combustion unit (130); and
providing at least part of the high-temperature steam (171) as energy source for the at least one retort unit (110).

13. The method according to claim 12, wherein one or more of the following process parameters are set as follows:
- the high-temperature steam (171), in particular at the outlets of the superheater(s) (178) and/or of the re-heater(s) (183), comprise a temperature in the range between 400°C and 700°C, in particular around 560°C;
- a hot gas-solid output of the combustion unit (130) comprise a temperature in the range between 700°C and 1000°C, in particular around 850°C;
- a temperature of the retort gas (113) is in the range between 400°C and 600°C, in particular around 500°C;
- a temperature of a preheated secondary air (15) for the combustion unit (130) is in the range between 250°C and 450°C, in particular around 350°C;
- a temperature of the preheated primary air (17) for the combustion unit (130) is in the range between 200°C and 400°C, in particular around 300°C;
- an output steam temperature of the at least one retort (110) is in the range between 200°C and 400°C, in particular around 300°C.
